# FASCICULE DE BREVET EUROPEEN

(11) **EP 3 382 155 B1**
(45) Date de publication et mention de la délivrance du brevet: **30.03.2022**
(21) Numéro de dépôt: 18156766.0
(22) Date de dépôt: 14.02.2018
(51) Int. Cl.: F01D 11/00, F16J 15/32

(54) **SYSTÈME D'ÉTANCHÉITÉ POUR TURBOMACHINE ET TURBOMACHINE ASSOCIÉE**
DICHTUNGSSYSTEM FÜR EINE STRÖMUNGSMASCHINE, UND ZUGEHÖRIGE STRÖMUNGSMASCHINE
SEALING SYSTEM FOR A TURBOMACHINE AND CORRESPONDING TURBOMACHINE

(30) Priorité: 31.03.2017 BE 201705223
(43) Date de publication de la demande: 03.10.2018
(73) Titulaire: Safran Aero Boosters SA, 4041 Herstal (BE)
(72) Inventeur: HABOTTE, Nicolas, 4350 Pousset (BE); HIERNAUX, Stéphane, 4680 Oupeye (BE)
(74) Mandataire: Lecomte & Partners

(56) Documents cités:
- EP-A2- 2 664 745
- FR-A1- 2 973 436

## Description

### Domaine technique

L'invention se rapporte au domaine de l'étanchéité par joint à brosse dans une turbomachine. Plus précisément, l'invention concerne un rotor équipé d'un joint à brosse radial coopérant avec une virole. L'invention a également trait à une turbomachine axiale, notamment un turboréacteur d'avion ou un turbopropulseur d'aéronef. Plus précisément, l'invention porte sur un système d'étanchéité pour turbomachine et sur une turbomachine, notamment un turboréacteur, comprenant un tel système d'étanchéité.

### Technique antérieure

Au décollage ou en vol, le rotor d'un turboréacteur se désaxe par rapport à son axe géométrique de rotation. En particulier, il peut se déplacer axialement comme radialement en plus de pivoter son axe de rotation par rapport à l'axe du stator. Afin de s'adapter à ces mouvements tout en préservant l'étanchéité, il est connu d'employer des joints à brosses réputés pour leur souplesse. Un gain substantiel peut être garanti dans le contexte d'un turboréacteur qui est exposé aux ingestions ou à la perte d'aube de soufflante.

Le document FR2977275A1 divulgue une turbomachine avec un rotor à l'intérieur d'une virole interne qui est solidaire du stator de la turbomachine. L'étanchéité peut être assurée par un joint à brosse. Or, l'étanchéité générale reste limitée.

Le document EP 2 664 745 A2 divulgue une turbine dont le rotor reçoit un joint à brosse. Les poils du joint à brosse s'étendent radialement, et pénètrent une gorge annulaire du stator qui entoure le rotor. La profondeur de la gorge permet d'effleurer les extrémités libres des poils.

Le document FR 2 973 436 A1 divulgue un joint à brosse assurant une étanchéité entre une pièce rotative et une pièce fixe de turbomachine. L'extrémité du joint à brosse est formée de poils inclinés par rapport à la direction radiale. La pièce fixe comprend un profil en forme de marche en regard du joint, et une surface tubulaire en contact du joint à brosse.

### Résumé de l'invention

### Problème technique

L'invention a pour objectif de résoudre au moins un des problèmes posés par l'art antérieur. Plus précisément, l'invention a pour objectif d'améliorer l'étanchéité d'un joint à brosse monté sur un rotor de turbomachine. L'invention a également pour objectif de proposer une solution simple, résistante, légère, économique, fiable, facile à produire, commode d'entretien, d'inspection aisée, améliorant le rendement, et réduisant les vibrations.

### Solution technique

L'invention a pour objet un système d'étanchéité pour turbomachine, notamment pour compresseur de turbomachine axiale, selon la revendication 1.

Des modes avantageux de l'invention sont définis dans les revendications dépendantes.

### Avantages apportés

L'invention permet de refermer la gorge sur chaque joint à brosse. Ainsi, le chemin contournant la virole et le joint est réduit en plus de former des chicanes ; ce qui s'oppose à la circulation de fuites. Malgré la promiscuité entre le joint à brosse avec les flancs et le fond de la gorge, la souplesse de fonctionnement est préservée car les mouvements restent tolérés. En effet, de tels mouvements n'impliquent pas de fortes usures d'un côté ou de l'autre. L'invention offre ainsi un compromis entre l'étanchéité et la marge de mouvement admissible entre la virole et le joint.

Aussi, la configuration de la virole simplifie sa fabrication. Les parties axiales à l'intérieur peuvent être plus facilement produites, notamment lorsqu'elles sont détachées axialement les unes des autres par les gorges. Un éventuel moulage est plus simple à réaliser, et différents matériaux peuvent être employés comme chargement.

### Brève description des dessins

La figure 1 représente une turbomachine axiale selon l'invention.
La figure 2 est un schéma d'un compresseur de turbomachine selon l'invention.
La figure 3 illustre une portion de compresseur avec un système d'étanchéité par joint à brosse selon l'invention.
La figure 4 est une vue de détail d'un système d'étanchéité par joint à brosse selon l'invention.
La figure 5 est un agrandissement d'une interface d'étanchéité selon l'invention.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

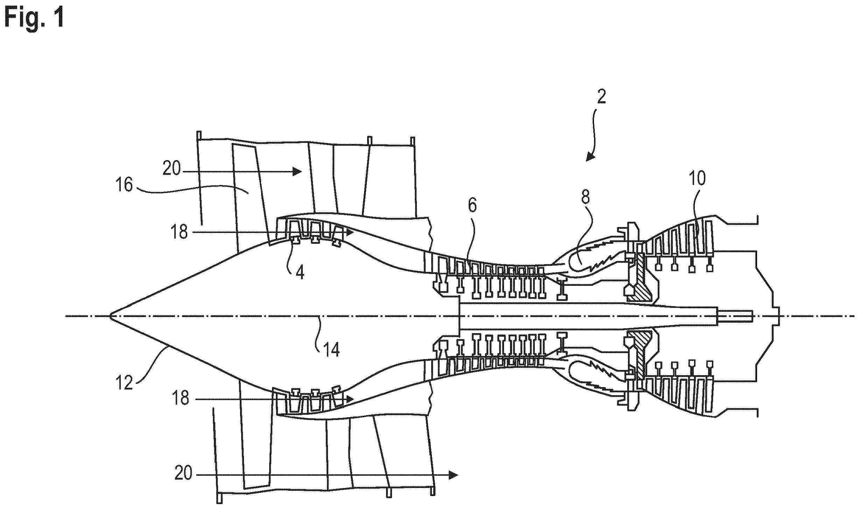

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et en un flux secondaire 20 traversant un conduit annulaire (partiellement représenté) le long de la machine pour ensuite rejoindre le flux primaire en sortie de turbine. La soufflante peut être du type non carénée, par exemple à double rotor contrarotatifs, éventuellement en aval.

Des moyens de démultiplication, tel un réducteur épicycloïdal, peut réduire la vitesse de rotation de la soufflante et/ou du compresseur basse pression par rapport à la turbine associée. Le flux secondaire peut être accéléré de sorte à générer une réaction de poussée. Les flux primaire 18 et secondaire 20 sont des flux annulaires coaxiaux et emmanchés l'un dans l'autre. Ils sont canalisés par le carter de la turbomachine et/ou des viroles. A cet effet, le carter présente des parois cylindriques qui peuvent être internes et externes.

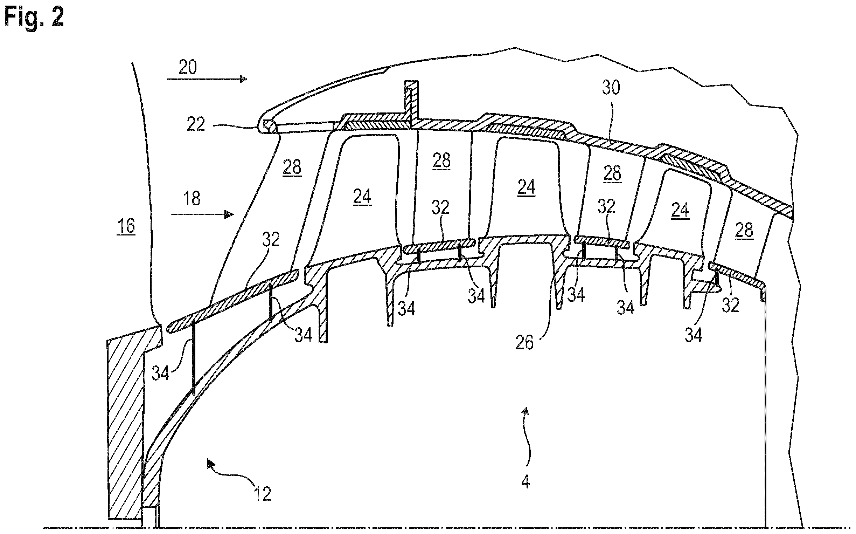

La figure 2 est une vue en coupe d'un compresseur d'une turbomachine axiale telle que celle de la figure 1. Le compresseur peut être un compresseur basse-pression 4. On peut y observer une partie de la soufflante 16 et le bec de séparation 22 du flux primaire 18 et du flux secondaire 20. Le rotor 12 comprend plusieurs rangées d'aubes rotoriques 24, en l'occurrence trois. Il peut comprendre un tambour 26, optionnellement monobloc, supportant une ou plusieurs rangées d'aubes 24. Les aubes 24 peuvent être solidaires du tambour, ou fixées par queues d'aronde.

Le compresseur basse pression 4 comprend plusieurs redresseurs, en l'occurrence quatre, qui contiennent chacun une rangée d'aubes statoriques 28. Les redresseurs sont associés au fan 16 ou à une rangée d'aubes rotoriques pour redresser le flux d'air, de sorte à convertir la vitesse du flux en pression, notamment en pression statique.

Les aubes statoriques 28 s'étendent essentiellement radialement depuis un carter extérieur 30, et peuvent y être fixées et immobilisées à l'aide d'axes ; ou par collage. Le carter 30 peut être formé de plusieurs anneaux, ou de demi-coquilles. Le carter peut être réalisé en matériau composite à matrice organique.

Les aubes statoriques 28 supportent des viroles internes 32. Ainsi dans le cas présent et sans limitation, quatre viroles internes 32 sont reliées au carter 30 par les rangées d'aubes statoriques 28. Afin d'assurer l'étanchéité entre les viroles 32 et le rotor 12, ce dernier est doté de joints à brosse 34. Le rotor 12 peut être libre de léchettes, également appelées nervures radiales circulaires, coopérant avec les viroles. Par exemple, le rotor peut comprendre un jeu de deux, trois ou davantage de joints à brosse 34 coopérant avec une même virole 32. Les joints à brosse 34 forment un ou plusieurs système d'étanchéité entre le rotor et le stator.

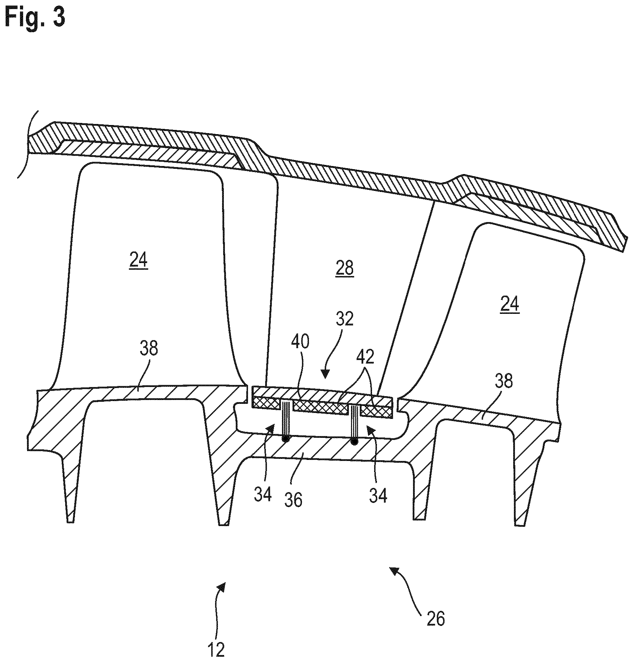

La figure 3 esquisse une portion de turbomachine, plus précisément une portion du compresseur présenté en figure 2. La portion comporte un système d'étanchéité qui peut être représentatif des systèmes d'étanchéites du compresseur et/ou de la turbomachine.

Les joints à brosse 34 peuvent être implantés sur un même tronçon annulaire 36 du rotor 12, notamment du tambour 26, disposé entre deux rangées d'aubes rotoriques 28, et éventuellement au droit axialement d'une même aube statorique 28. Les joints à brosse 34 peuvent être fixés dans l'épaisseur radiale du tronçon 36. Le tronçon peut être généralement tubulaire ou sensiblement tronconique.

La virole 32 peut présenter deux couches selon son épaisseur radiale. Elle peut être plus épaisse que les plateformes annulaires 38 qui reçoivent les aubes rotoriques 24. Les couches peuvent comprendre une paroi annulaire 40 formant un support circulaire relié aux aubes statoriques 28, et une couche d'un matériau de chargement 42. Ce matériau peut être un matériau type abradable, c'est-à-dire qu'il est apte à s'effriter en cas de contact avec les joints à brosse 34. Il peut s'agir de silicone. La paroi annulaire 40 peut être réalisée en matériau composite à matrice organique renforcée par des fibres, le joint à brosse pouvant frotter directement contre ledit matériau composite selon les phases de fonctionnement de la turbomachine.

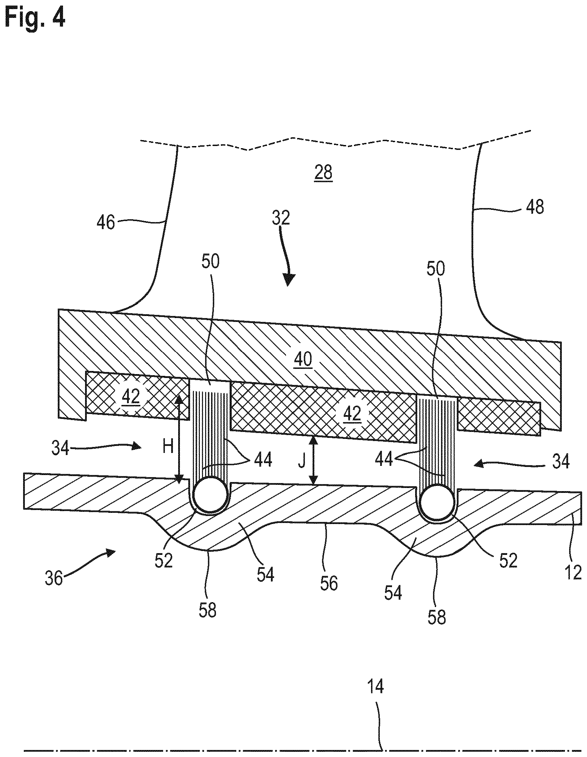

La figure 4 est un agrandissement d'un système d'étanchéité centré sur la virole et les joints à brosse, le système pouvant correspondre à celui détaillé en figure(s) précédente(s). L'axe de rotation 14 est indiqué en guise de repère.

Les poils 44 des joints à brosse 34 s'étendent radialement vers l'extérieur. La force centrifuge tend à les tendre vers la viole 32. Ils peuvent pointer vers le bord d'attaque 46 et le bord de fuite 48 de l'aube statorique 28.

La virole 32 présente une gorge annulaire 50, préférentiellement plusieurs gorges annulaires 50, ouvertes radialement. Les gorges 50 peuvent être des gorges internes, ouvertes vers l'intérieur. Au moins un ou chaque joint 34 est engagé dans une gorge 50 afin d'y assurer une étanchéité. Les extrémités radiales libres des joints 34 sont logées dans les gorges 50. Celles-ci peuvent être ajustée aux joints à brosse, notamment axialement. Par exemple, les extrémités radiales de joints 34 peuvent être généralement complémentaires de celle des gorges 50. Au moins une ou chaque gorge 50 peut être formée par la paroi annulaire 40 et/ou par le matériau de chargement 42.

Le rotor 12 comporte un écart axial entre les joints à brosse 34. Il peut présenter une fente annulaire 52 pour la fixation de chaque joint à brosse 34. Chaque fente annulaire 52 est en regard et dans le prolongement radial de la gorge 50 associée. Pour accueillir, les fentes 52, et plus généralement les joints 34, le tronçon 36 du rotor 12 comporte une surépaisseur 54 au niveau axialement du joint à brosse 34. Selon une autre interprétation, la surface interne annulaire 56 du rotor comporte un bourrelet circulaire 58 au niveau, axialement, de chaque joint à brosse 34. La surépaisseur 54 peut être formée vers l'extérieur du rotor 12, en plus ou à la place de celle à l'intérieur.

Dans chaque joint à brosse 34, les poils 44 de présentent une hauteur moyenne H, et le système présente un jeu annulaire J entre le rotor 12 et la virole 32, la hauteur H représentant au moins : 101%, ou 105%, ou 110%, ou 150% du jeu annulaire J. le jeu J peut être mesuré radialement, par exemple au milieu des joints 34.

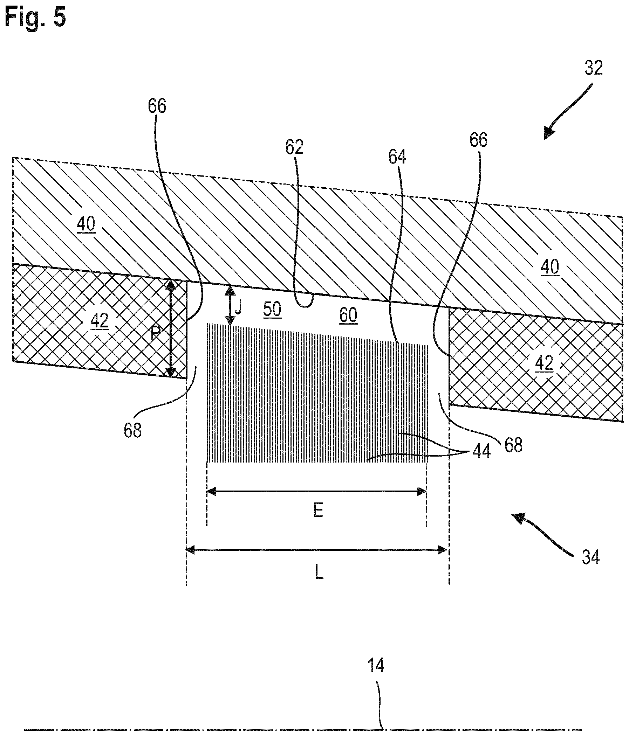

La figure 5 est un agrandissement d'un joint à brosse 34 centré sur les extrémités libres de ses poils 44. Les épaisseurs de la paroi annulaire 40 et du matériau de chargement 42 de la virole 32 sont partiellement représentées. L'axe de rotation 14 est indiqué en guise de repère.

La gorge présente une largeur axiale L et une profondeur P mesurée radialement. Le joint à brosse 34 comporte une épaisseur axiale E. La profondeur P peut être une profondeur moyenne, notamment lorsque les couches de matériau de chargement 42 sont d'épaisseurs radiales différentes. L'épaisseur E s'étend sur la majorité de la largeur L en l'occurrence sur au moins 75%, ou 90%, ou 95%, de la largeur L. Ceci permet de remplir la gorge et d'y limiter les fuites.

Le système d'étanchéité comporte un passage annulaire 60. Il forme un jeu J, mesuré radialement. Ce passage 60 est ménagé à l'intérieur de la gorge 50 et contourne le joint à brosse 34; à la fois axialement et radialement. En fonctionnement, la force centrifuge agrandit le rotor et rapproche les poils 44 de la surface interne 62 de la gorge 50. D'ailleurs, l'enveloppe externe 64 définie par les extrémités libres des poils 44 épouse ladite surface interne 62. L'enveloppe 64 comme la surface peuvent généralement être circulaires et complémentaires. Le passage annulaire 60 forme un jeu J mesuré radialement entre l'enveloppe 64 et la surface interne 62.

La gorge 50 comporte un fond formé par la surface interne 62, par exemple sur la paroi annulaire 40, et deux surfaces annulaires planes 66 en amont et en aval du joint à brosse 34. Ces surfaces annulaires 66 s'étendent radialement sur toute la hauteur radiale du matériau de chargement 42 qui d'ailleurs peut être coupé par la gorge 50. Les surfaces annulaires 66 sont radialement au niveau du joint à brosse 34, éventuellement sur la majorité de leurs hauteurs radiales.

Les surfaces (62 ; 66) de la gorge 50 deviennent mixtes. Aussi, les surfaces planes 66 restent à distance des poils 44. Elles en sont séparées par des marges axiales 68 ; dont une marge amont 68 et une marge axiale 68. Ces marges 68 peuvent faire partie du passage 60. Les épaisseurs axiales des marges 68 peuvent être comprises entre : 0% et 20%, ou entre 0% et 5% de la largeur L. Au repos, ces épaisseurs peuvent être comprises entre 1% et 15%, ou entre 5% et 10% de la largeur L.

## Revendications

1. Système d'étanchéité pour turbomachine (2), notamment pour compresseur (4 ; 6) de turbomachine axiale (2), le système comprenant :
- une virole (32) ;
- un rotor (12) qui est disposé à l'intérieur de la virole (32), et qui comporte un axe de rotation (14) et au moins un joint à brosse (34) circulaire dont les poils (44) s'étendent principalement radialement ;
la virole (32) comportant une gorge annulaire (50) ajustée à l'épaisseur axiale E du joint à brosse (34), ladite épaisseur E étant mesurée axialement contre les poils (44) du joint à brosse (34) ; **caractérisé en ce que** la gorge annulaire (50) présente une largeur axiale L, et l'épaisseur axiale E du joint à brosse (34) représente la majorité de la largeur axiale L, l'épaisseur axiale E s'étendant au moins sur 75% de la largeur L.

2. Système selon la revendication 1, **caractérisé en ce que** les poils (44) présentent une hauteur H, et le système présente un jeu annulaire J entre le rotor (12) et la virole (32), la hauteur H représentant au moins 105% du jeu annulaire J.

3. Système selon l'une des revendications 1 à 2, **caractérisé en ce que** la gorge annulaire (50) comprend au moins une ou deux surfaces annulaires (66), éventuellement planes et perpendiculaires à l'axe de rotation (14) du rotor (12), lesdites surfaces (66) étant en axialement regard du joint à brosse (34).

4. Système selon l'une des revendications 1 à 3, **caractérisé en ce que** la virole (32) comporte une paroi annulaire (40) avec une surface annulaire destinée à guider un flux annulaire (18) de turbomachine (2), la gorge annulaire étant éventuellement réalisée dans l'épaisseur de ladite paroi annulaire.

5. Système selon la revendication 4, **caractérisé en ce que** la paroi annulaire (40) est réalisée en matériau composite à matrice organique, la gorge annulaire (50) étant éventuellement formée par ledit matériau composite.

6. Système selon l'une des revendications 1 à 5, **caractérisé en ce que** la virole (32) comporte une couche annulaire d'un matériau de chargement (42), éventuellement un matériau abradable tel du silicone, la gorge (50) étant au moins partiellement formée par le matériau de chargement.

7. Système selon la revendication 6, **caractérisé en ce que** la gorge annulaire (50) divise la couche annulaire (42) en plusieurs parties axiales.

8. Système selon l'une des revendications 1 à 7, **caractérisé en ce que** le rotor (12) comprend une surépaisseur (54) au niveau axialement du joint à brosse (34).

9. Système selon l'une des revendications 1 à 8, **caractérisé en ce que** le rotor (12) comprend une surface annulaire interne (56) avec un bourrelet circulaire (58) au niveau du joint à brosse (34).

10. Système selon l'une des revendications 1 à 9, **caractérisé en ce que** le rotor (12) comprend un tambour aubagé (26) ou au moins un disque aubagé, qui porte le joint à brosse (34).

11. Système selon l'une des revendications 1 à 10, **caractérisé en ce que** le joint à brosse (34) comporte une enveloppe annulaire (64) radialement en regard de la virole (32), la virole comportant une surface annulaire d'étanchéité (62) généralement tubulaire ou sensiblement conique qui épouse ladite enveloppe (64).

12. Système selon l'une des revendications 1 à 11, **caractérisé en ce qu'**il comprend une marge amont (68) et/ou une marge aval (68) entre le joint à brosse (34) et la gorge (50).

13. Système selon l'une des revendications 1 à 12, **caractérisé en ce que** le joint à brosse (34) et la gorge (50) sont respectivement un premier joint (34) et une première gorge (50), le rotor (12) comprenant en outre un deuxième joint (34) similaire au premier joint (34), et la virole interne (32) comporte une deuxième gorge annulaire (50) ajustée à l'épaisseur axiale du deuxième joint (34), la deuxième gorge (50) étant éventuellement similaire à la première gorge (50) et disposé axialement à distance de ladite première gorge (50).

14. Turbomachine (2), notamment un turboréacteur, comprenant un système d'étanchéité, **caractérisée en ce que** le système d'étanchéité est conforme à l'une des revendications 1 à 13, préférentiellement la turbomachine (2) comprend une rangée annulaire d'aubes statoriques (28) auxquelles la virole (32) est liée.

## Patentansprüche

1. Abdichtungssystem für eine Turbomaschine (2), insbesondere für einen axialen Turbokompressor (4 ; 6), das Folgendes umfasst:
- einen Gehäusekäfig (32);
- einen Rotor (12), der innerhalb des Gehäusekäfiges (32) platziert ist sowie eine Drehachse (14) mit mindestens einer kreisförmigen Bürstendichtung (34), deren Borsten (44) hauptsächlich radial verlaufen;
der Gehäusekäfig (32) weist eine Ringnut (50) auf, die an die axiale Dicke E der Bürstendichtung (34) angepasst ist, wobei diese Dicke E axial gegen die Borsten (44) der Bürstendichtung (34) gemessen wird;
**dadurch gekennzeichnet dass**
die Ringnut (50) eine axiale Breite L hat, und die axiale Dicke E der Bürstendichtung (34) den größten Teil der axialen Breite L ausmacht, wobei sich die axiale Dicke E über mindestens 75 % der Breite L erstreckt.

2. System gemäß Patentanspruch 1, **dadurch gekennzeichnet dass** die Borsten (44) eine Höhe H haben und das System ein ringförmiges Spiel J zwischen dem Rotor (12) und dem Gehäusekäfig (32) aufweist, wobei die Höhe H mindestens 105 % des ringförmigen Spiels J beträgt.

3. System gemäß einem der Patentansprüche 1 und 2, **dadurch gekennzeichnet dass** die Ringnut (50) besitzt mindestens eine oder zwei ringförmige Flächen (66), die gegebenenfalls flach und senkrecht zur Drehachse (14) des Rotors (12) stehen, wobei die Flächen (66) der Bürstendichtung (34) axial gegenüberliegen.

4. System gemäß einem der Patentansprüche 1 bis 3, **dadurch gekennzeichnet dass** der Gehäusekäfig (32) eine Ringwand (40) mit einer Ringfläche zur Führung einer Ringströmung (18) in der Turbomaschine (2) aufweist, dabei entspricht die Ringnut der Dicke der ringförmigen Wand.

5. System gemäß Patentanspruch 4, **dadurch gekennzeichnet dass** die ringförmige Wand (40) aus einem Verbundwerkstoff mit organischer Matrix ist, wobei die Ringnut (50) gegebenenfalls aus dem Verbundwerkstoff besteht.

6. System gemäß einem der Patentansprüche 1 bis 5, **dadurch gekennzeichnet dass** der Gehäusekäfig (32) eine ringförmige Schicht aus einem Verstärkungsmaterial (42), wie z. B. abreibbares Silikon umfasst, wobei die Ringnut (50) zumindest teilweise aus dem Verstärkungsmaterial besteht.

7. System gemäss Patentanspruch 6, **dadurch gekennzeichnet dass** die Ringnut (50) die ringförmige Schicht (42) in eine Vielzahl von axialen Abschnitten unterteilt.

8. System gemäß einem der Patentansprüche 1 bis 7, **dadurch gekennzeichnet dass** der Rotor (12) eine Überdicke (54) der axialen Höhe im axialen Bereich der Bürstendichtung (34) aufweist.

9. System gemäß einem der Patentansprüche 1 bis 8, **dadurch gekennzeichnet dass** der Rotor (12) eine innere Ringfläche (56) mit einem kreisförmigen Wulst (58) an der Bürstendichtung (34) besitzt.

10. System gemäß einem der Patentansprüche 1 bis 9, **dadurch gekennzeichnet dass** der Rotor (12) eine Schaufeltrommel (26) oder zumindest eine Schaufelscheibe aufweist, welche die Bürstendichtung (34) trägt.

11. System gemäß einem der Patentansprüche 1 bis 10, **dadurch gekennzeichnet dass** die Bürstendichtung (34) eine ringförmige Umhüllung (64) aufweist, die dem Gehäusekäfig (32) radial gegenüberliegt, wobei der Gehäusekäfig weist dabei eine runde Dichtungsfläche (62) auf, die im Allgemeinen rohrförmig oder konisch verläuft und in die besagte Umhüllung (64) passt.

12. System gemäß einem der Patentansprüche 1 bis 11, **dadurch gekennzeichnet dass** es einen Vorlauf (68) und/oder einen Nachlauf (68) zwischen der Bürstendichtung (34) und der Nut (50) gibt.

13. System gemäß einem der Patentansprüche 1 bis 12, **dadurch gekennzeichnet dass** die Bürstendichtung (34) und die Nut (50) jeweils eine erste Dichtung (34) und eine erste Nut (50) darstellen, der Rotor (12) weist außerdem eine zweite Dichtung (34) auf, die der ersten Dichtung (34) ähnlich ist, der Gehäusekäfig (32) umfasst eine zweite Ringnut (50), die an die axiale Dicke der zweiten Dichtung (34) angepasst ist, wobei die zweite Nut (50) optional der ersten Ringnut (50) ähnlich ist und axial von der ersten Nut (50) getrennt ist.

14. Turbomaschine (2), insbesondere Turboreaktor mit einem Dichtungssystem, **dadurch gekennzeichnet dass** das Dichtungssystem gemäß einem der Patentansprüche 1 bis 13 ausgebildet ist, die Turbomaschine (2) vorzugsweise besteht dabei aus einer ringförmigen Anordnung von Leitschaufeln (28), die mit der Gehäusekäfig (32) verbunden sind.

## Claims

1. Sealing system for a turbomachine (2), in particular for a compressor (4; 6) of an axial turbomachine (2), the system comprising:
- a shroud (32);
- a rotor (12) which is arranged inside the shroud (32), and which has an axis of rotation (14) and at least one circular brush seal (34), the bristles (44) of which extend mainly radially;
the shroud (32) has an annular groove (50) adjusted to the axial thickness E of the brush seal (34), said thickness E being measured axially against the bristles (44) of the brush seal (34);
**characterized in that** the annular groove (50) has an axial width L, and the axial thickness E of the brush seal (34) represents the majority of the axial width L, the axial thickness E extending at least over 75% of the width L.

2. System according to claim 1, **characterized in that** the bristles (44) have a height H, and the system has an annular clearance J between the rotor (12) and the shroud (32), the height H being at least 105% of the annular clearance J.

3. System according to one of claims 1 and 2, **characterized in that** the annular groove (50) comprises at least one or two annular surfaces (66), optionally flat and perpendicular to the axis of rotation (14) of the rotor (12), said surfaces (66) being axially facing the brush seal (34).

4. System according to any one of claims 1 to 3, **characterized in that** the shroud (32) comprises an annular wall (40) with an annular surface intended to guide an annular flow (18) of the turbomachine (2), the annular groove optionally being made in the thickness of said annular wall.

5. System according to claim 4, **characterized in that** the annular wall (40) is made of an organic matrix composite material, the annular groove (50) optionally being formed by said composite material.

6. System according to any one of claims 1 to 5, **characterized in that** the shroud (32) comprises an annular layer of a loading material (42), optionally an abradable material such as silicone, the groove (50) being at least partially formed by the loading material.

7. System according to claim 6, **characterized in that** the annular groove (50) divides the annular layer (42) into a plurality of axial portions.

8. System according to any one of claims 1 to 7, **characterized in that** the rotor (12) comprises a thickening (54) at the brush seal (34) axially.

9. System according to any one of claims 1 to 8, **characterized in that** the rotor (12) comprises an inner annular surface (56) with a circular bead (58) at the brush seal (34).

10. System according to any one of claims 1 to 9, **characterized in that** the rotor (12) comprises a bladed drum (26) or at least one bladed disk, which carries the brush seal (34).

11. System according to any one of claims 1 to 10, **characterized in that** the brush seal (34) comprises an annular envelope (64) radially facing the shroud (32), the shroud comprising a generally tubular or substantially conical annular sealing surface (62) that conforms to said envelope (64).

12. System according to any one of claims 1 to 11, **characterized in that** it comprises an upstream margin (68) and/or a downstream margin (68) between the brush seal (34) and the groove (50).

13. System according to any one of claims 1 to 12, **characterized in that** the brush seal (34) and the groove (50) are respectively a first seal (34) and a first groove (50), the rotor (12) further comprising a second seal (34) similar to the first seal (34), and the inner shroud (32) includes a second annular groove (50) matched to the axial thickness of the second seal (34), the second groove (50) optionally being similar to the first groove (50) and disposed axially spaced from said first groove (50).

14. A turbomachine (2), especially a turbojet engine, comprising a sealing system, **characterized in that** the sealing system is in accordance with any one of claims 1 to 13, preferably the turbomachine (2) comprises an annular row of stator vanes (28) to which the shroud (32) is linked.
